# EUROPEAN PATENT APPLICATION

(11) **EP 4 797 874 A1**
(43) Date of publication of application: **26.08.2026**
(21) Application number: 25171453.1
(22) Date of filing: 18.04.2025
(51) Int. Cl.: H05B 45/20, H05B 47/10

(54) **POWER SUPPLY FOR DIMMING AND COLOR TEMPERATURE ADJUSTMENT**

(30) Priority: 25.02.2025 CN 202520316994 U
(71) Applicant: Zhuhai Shengchang Electronics Co., Ltd., Zhuhai City, Guangdong Province (CN)
(72) Inventor:
(74) Representative: Patent 42

(57) **Abstract**

The present invention relates to the technical field of dimming power supplies and discloses a power supply for dimming and color temperature adjustment, including a control panel, a rear housing, and a control circuit board. The control panel is provided with a pressing switch knob encoder, the rear housing is disposed on a back side of the control panel, and a wiring terminal is disposed on a surface of the rear housing. The control circuit board is disposed in the rear housing, a control circuit is disposed on the control circuit board, and the control circuit board is electrically connected to the pressing switch knob encoder and the wiring terminal. The control circuit board includes a main board and a plurality of sub-boards vertically disposed on the main board, and an electrical element of the control circuit is distributed on the main board and the sub-boards.

## Description

### TECHNICAL FIELD

The present invention relates to the technical field of dimming power supplies, and specifically to a power supply for dimming and color temperature adjustment.

### BACKGROUND

With the improvement of people's living standards, the requirements for lamplight are also constantly increasing. In some life scenarios, it is necessary to adjust the color temperature and brightness of the lamplight. According to some existing dimming solutions, a dimming instruction is sent to a power supply through a dimmer or a dimming system; and after receiving a dimming signal, the power supply adjusts and changes the output to adjust the brightness or color temperature of the lamplight. However, this method is troublesome in wiring and requires purchasing a matching dimmer and a power supply that can receive a matching dimming signal. To solve the above technical problems, some manufacturers have also developed some products in which the power supply and the dimmer are combined to be placed in a switch-sized housing. However, such products are low in power density and cannot adapt to high-power application scenarios.

### SUMMARY

To overcome deficiencies in the prior art, the present invention aims to provide a power supply for dimming and color temperature adjustment, which integrates a dimmer and a power supply, has higher power density, is convenient to mount, and can also adapt to some high-power application scenarios.

To solve the above problems, a technical solution adopted by the present invention is as follows: a power supply for dimming and color temperature adjustment, including: a control panel, provided with a pressing switch knob encoder; a rear housing, disposed on a back side of the control panel where a wiring terminal is disposed on a surface of the rear housing; and a control circuit board, disposed in the rear housing, where a control circuit is disposed on the control circuit board, the control circuit board is electrically connected to the pressing switch knob encoder and the wiring terminal, the control circuit board includes a main board and a plurality of sub-boards vertically disposed on the main board, and an electrical element of the control circuit is distributed on the main board and the sub-boards.

Compared with the prior art, beneficial effects of the present invention are as follows: The pressing switch knob encoder is used as a control device for dimming and color temperature adjustment, and two manners of pressing and rotating may be combined, so that adjusting signals of at least two parameters such as brightness and color temperature are input through one control device, thereby reducing a quantity of control devices, preventing the control device from occupying a part of space of the power supply, and reducing a size of the product. Meanwhile, the control circuit board adopts a three-dimensional layout manner of combining the main board and the sub-boards, to fully utilize internal space of the product, thereby improving power density of the product, and improving output power of the product without increasing the size of the product, so that the product can adapt to some high-power application scenarios.

According to the above power supply for dimming and color temperature adjustment, the control circuit includes a switch power supply circuit, an adjusting circuit, and a main control circuit, an input end of the switch power supply circuit is electrically connected to an input terminal in the wiring terminal, an output end of the switch power supply circuit is electrically connected to an input end of the adjusting circuit and the main control circuit, an output end of the adjusting circuit is electrically connected to an output terminal in the wiring terminal, the adjusting circuit is controlled by the main control circuit, and the main control circuit is electrically connected to the pressing switch knob encoder.

According to the above power supply for dimming and color temperature adjustment, the adjusting circuit includes at least two output adjusting circuits, and output ends of the two output adjusting circuits are electrically connected to two different output terminals in the wiring terminal respectively.

According to the above power supply for dimming and color temperature adjustment, the control circuit further includes a wireless control module, and the wireless control module is electrically connected to the main control circuit.

According to the above power supply for dimming and color temperature adjustment, a first electrical connector is disposed on the back side of the control panel, a second electrical connector matched with the first electrical connector is disposed on a front surface of the rear housing, the first electrical connector is electrically connected to the pressing switch knob encoder, the second electrical connector is electrically connected to the control circuit board, and the pressing switch knob encoder can be in electrical insertion connection with the second electrical connector through the first electrical connector to be electrically connected to the control circuit board.

According to the above power supply for dimming and color temperature adjustment, the rear housing includes an inner housing and an outer housing, the control circuit board is disposed in the inner housing, the inner housing is detachably connected to the outer housing, the outer housing is detachably connected to the control panel, and the wiring terminal is disposed on a surface of the inner housing.

According to the above power supply for dimming and color temperature adjustment, a trim plate is detachably disposed on a front surface of the control panel, and the trim plate is provided with a through hole allowing a knob of the pressing switch knob encoder to extend out.

According to the above power supply for dimming and color temperature adjustment, a rotating handle is disposed on a knob of the pressing switch knob encoder.

The present invention is further described below in detail with reference to the accompanying drawings and specific embodiments.

### BRIEF DESCRIPTION OF THE DRAWINGS

FIG. 1 is a schematic diagram of a three-dimensional structure of a power supply for dimming and color temperature adjustment according to an embodiment of the present invention;
FIG. 2 is a schematic exploded view of a power supply for dimming and color temperature adjustment according to an embodiment of the present invention;
FIG. 3 is a schematic structural diagram of a control circuit board according to an embodiment of the present invention;
FIG. 4 is a back view of a control panel according to an embodiment of the present invention;
FIG. 5 is a back view of an outer housing according to an embodiment of the present invention;
FIG. 6 is a functional block diagram of a control circuit according to an embodiment of the present invention; and
FIG. 7 is a functional block diagram of a control circuit according to another embodiment of the present invention.

Reference numerals in the drawings:
100. control panel; 101. trim plate; 102. first electrical connector; 110. pressing switch knob encoder; 111. rotating handle; 112. encoder signal processing circuit board; 200. rear housing; 210. inner housing; 211. front housing; 2111. second electrical connector; 2112. wiring terminal; 212. rear cover; 220. outer housing; 221. connecting cover; 2211. avoidance hole; 222. side housing; 2221. threaded hole; 300. control circuit board; 310. main board; 320. sub-board.

### DETAILED DESCRIPTION OF THE EMBODIMENTS

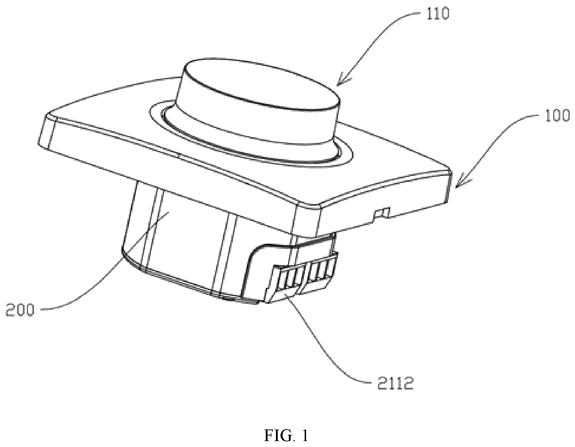

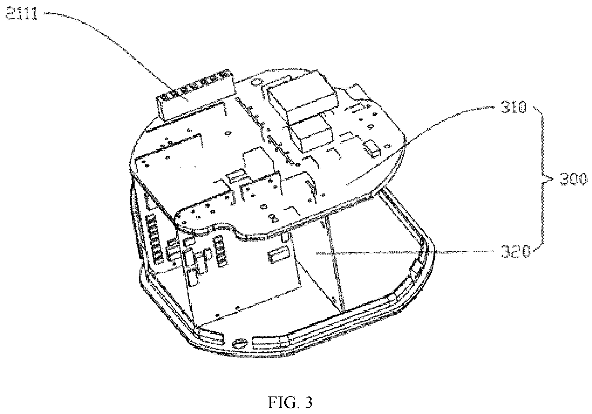

Embodiments of the present invention are described below in detail. Referring to FIG. 1 to FIG. 3, an embodiment of the present invention provides a power supply for dimming and color temperature adjustment, including a control panel 100 and a rear housing 200. A pressing switch knob encoder 110 is disposed on the control panel 100, and a control circuit board 300 is disposed in the rear housing 200. The pressing switch knob encoder 110 is a rotary encoder integrated with a button, and a knob may be pressed while rotating to drive the encoder to rotate, to play a role of a pressing switch. The rear housing 200 is disposed on a back side of the control panel (100), and a wiring terminal 2112 is disposed on a surface of the rear housing. A control circuit is disposed on the control circuit board 300, and the control circuit board 300 is electrically connected to the pressing switch knob encoder 110 and the wiring terminal 2112. The control circuit board 300 includes a main board 310 and a plurality of sub-boards 320 vertically disposed on the main board 310, and an electrical element of the control circuit is distributed on the main board 310 and the sub-boards 320.

The power supply for dimming and color temperature adjustment integrates functions of a dimmer and a power supply, and an electric wire between the dimmer and the power supply does not need to be arranged additionally during mounting, so that mounting is convenient. Through direct cooperation of electrical signals generated by two actions of pressing and rotating of one control apparatus, the pressing switch knob encoder 110, lamp switching on/off and brightness and color temperature adjustments can be implemented by using one control apparatus, thereby reducing a quantity of control devices on the control panel 100, so that a volume of the product is reduced, and the control device is prevented from occupying space of the power supply, to improve power density of the product. Meanwhile, the control circuit board 300 adopts a three-dimensional layout structure formed by splicing the main board 310 and the sub-boards 320 in a three-dimensional manner, so that space in the rear housing 200 can be utilized more fully, thereby further improving the power density of the product without increasing the volume of the product. The power supply for dimming and color temperature adjustment can have higher output power without significantly increasing the volume of the product, to adapt to a high-power application scenario.

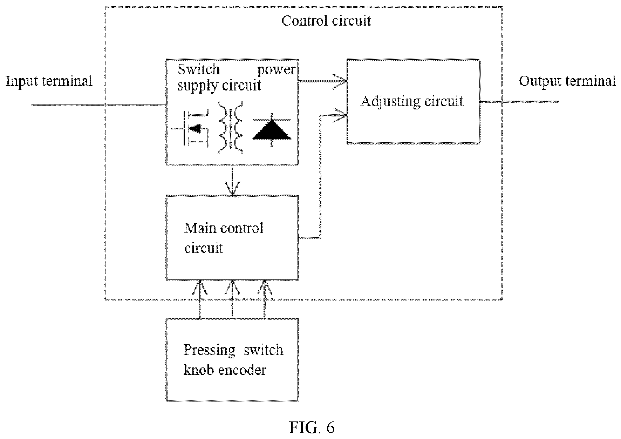

Referring to FIG. 6, the control circuit includes a switch power supply circuit, an adjusting circuit, and a main control circuit. An input end of the switch power supply circuit is electrically connected to an input terminal of the wiring terminal 2112, and an output end of the switch power supply circuit is electrically connected to an input end of the adjusting circuit and the main control circuit, to supply power to the adjusting circuit and the main control circuit. An output end of the adjusting circuit is electrically connected to an output terminal in the wiring terminal 2112, the adjusting circuit is controlled by the main control circuit, and the main control circuit is electrically connected to the pressing switch knob encoder 110.

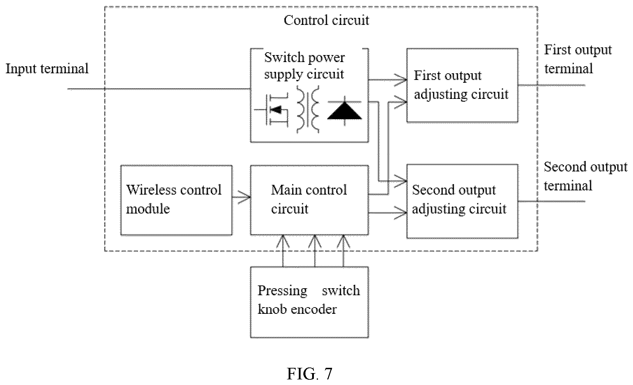

Referring to FIG. 7, in the embodiment, the adjusting circuit includes at least two output adjusting circuits, and output ends of the two output adjusting circuits are electrically connected to two different output terminals in the wiring terminal 2112 respectively and are respectively configured to adjust brightness and a color temperature that are of a lamp load. The control circuit may further include a wireless control module, and the wireless control module is electrically connected to the main control circuit to be configured to receive a wireless control signal, thereby implementing wireless dimming control of the lamp load. In the embodiment, the pressing switch knob encoder 110 outputs three signals, including two pulse signals of a phase A and a phase B and one switch signal, to the main control circuit. The main control circuit determines a direction of the knob according to the two pulse signals, to determine an adjusting direction of the brightness and the color temperature. According to the switch signal, the main control circuit may assist in determining whether to adjust the color temperature or the brightness, or control a switch of a lamp needs. For example, functions of the knob are switched through pressing time of the knob or frequency of consecutive short presses, to implement that a plurality of control signals are input through a single control device.

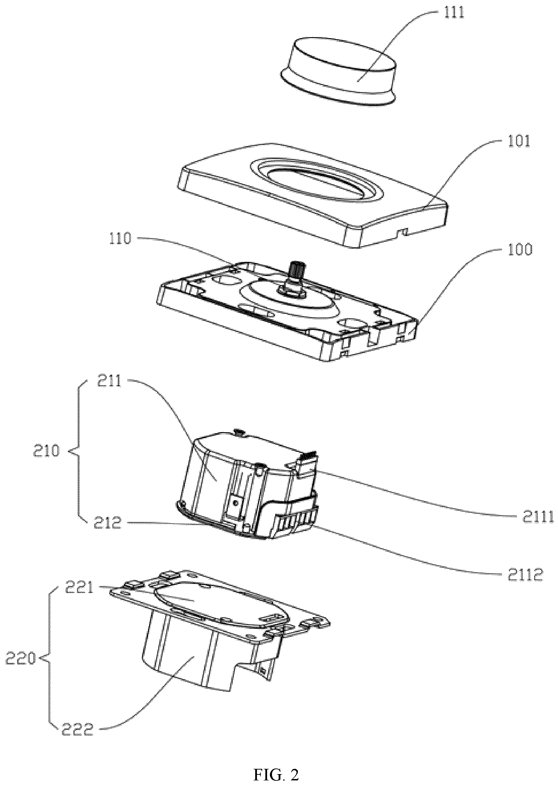

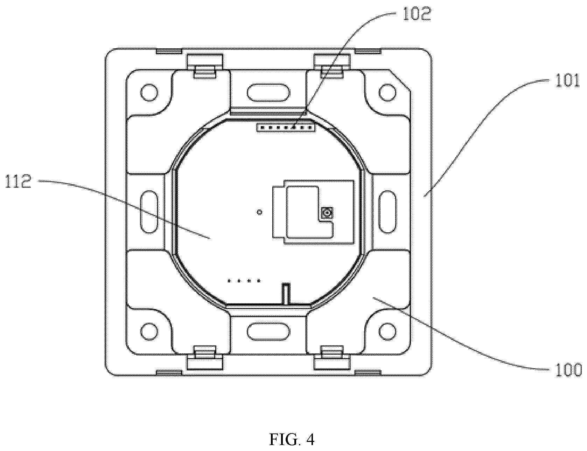

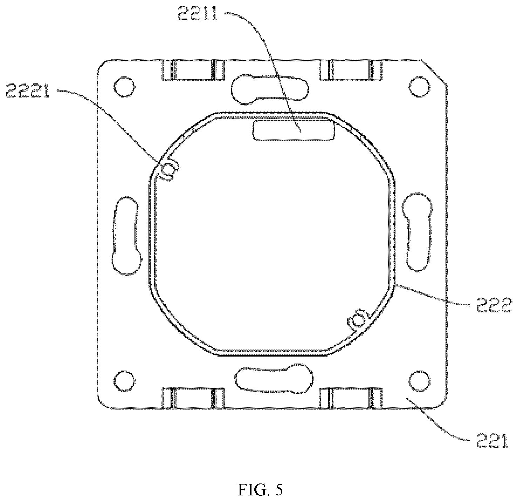

Referring to FIG. 2, FIG. 4, and FIG. 5, for ease of maintenance and repair of the product, both the control panel 100 and the control circuit board 300 adopt a modular design. A first electrical connector 102 is disposed on the back side of the control panel 100, and a second electrical connector 2111 matched with the first electrical connector 102 is disposed on a front surface of the rear housing 200. The first electrical connector 102 is electrically connected to the pressing switch knob encoder 110, the second electrical connector 2111 is electrically connected to the control circuit board 300, and the control panel 100 may implement that the pressing switch knob encoder 110 is electrically connected to the control circuit board 300 through insertion connection between the first electrical connector 102 and the second electrical connector 2111. The rear housing 200 is detachably connected to the control panel 100. When one of the control panel 100 and the control circuit board 300 is damaged, a damaged module may be detached and replaced, to quickly maintain or repair the product. In the embodiment, an encoder signal processing circuit board 112 configured to process a pulse signal of the pressing switch knob encoder 110 is disposed in the control panel 100, and both the pressing switch knob encoder 110 and the first electrical connector 102 are electrically connected to the encoder signal processing circuit board.

Referring to FIG. 2, FIG. 4, and FIG. 5, in the embodiment, the rear housing 200 includes two parts: an outer housing 220 and an inner housing 210. The outer housing 220 is detachably connected to the back side of the control panel 100, the inner housing 210 is detachably connected to the outer housing 220, and the control circuit board 300 is disposed in the inner housing 210. Both the second electrical connector 2111 and the wiring terminal 2112 are disposed on an outer surface of the inner housing 210, and the inner housing 210 and the control circuit board 300 forms a control module and is mechanically connected to the control panel 100 through the outer housing 220. The inner housing 210 is formed by a front housing 211 and a rear cover 212 in an enclosed manner. The front housing 211 and the rear cover 212 are enclosed to form space for accommodating the control circuit board 300. The outer housing 220 is composed of a connecting cover 221 and a side housing 222. The connecting cover 221 is configured to be detachably connected to the back side of the control panel 100, and the connecting cover 221 forms a back board of the control panel 100 after being connected to the control panel 100, to protect a back side of the encoder signal processing circuit board 112. The side housing 222 is a barrel-shaped housing. A shape of the side housing 222 is matched with that of the inner housing 210, and the inner housing 210 may be inserted into the side housing 222, so that the inner housing 210 is connected to the outer housing 220. The second electrical connector 2111 is disposed on a front surface of the front housing 211, and the wiring terminal 2112 is disposed on a side surface of the front housing 211. The connecting cover 221 is provided with an avoidance hole 2211 for avoiding the second electrical connector 2111 on the front housing 211. A position, corresponding to the wiring terminal 2112, on a side surface of the side housing 222 is also designed to avoid the wiring terminal 2112, to facilitate exposing a wire by the wiring terminal 2112. It may be understood that through a screw, a snap fit, or other methods, the control panel 100 may be detachably connected to the outer housing 220, and the outer housing 220 may be detachably connected to the inner housing 210. An inner side of the side housing 222 is provided with a threaded hole 2221 for securely connecting the inner housing 210 to the outer housing 220.

Referring to FIG. 1, FIG. 2, and FIG. 4, in the embodiment, the control panel 100 is provided with a bolt hole for mounting the product. A trim plate 101 is detachably disposed on a front surface of the control panel 100, and the trim plate 101 is configured to shelter the bolt hole on the control panel 100, to improve aesthetics of the mounted product. A rotating handle 111 is disposed on the knob of the pressing switch knob encoder 110, to facilitate pressing and rotating the knob of the pressing switch knob encoder 110, thereby improving use experience of a user.

It should be noted that in the description of the present invention, the positional descriptions referred to, for example, the directional or positional relationships indicated by up, down, front, rear, left, right, and the like are based on the directional or positional relationships shown in the accompanying drawings, and are only for convenience and simplification of description of the present invention, but not for indicating or implying that the referred apparatus or element must have a specific direction and be constructed and operated in a specific direction, and thus should not be construed as limiting the present invention.

In the description of the present invention, "several" means one or more, "a plurality of" means two and more than two, "greater than a number", "less than a number", "exceed a number" and the like indicate that the number is excluded, and "above a number", "below a number", "within a number", and the like indicate that the number is included. "First", "second", or the like are intended only for distinguishing between technical features but cannot be used to indicate or imply relative importance or implicitly specify a quantity of indicated technical features or implicitly specify a sequential relationship of indicated technical features.

In the description of the present invention, unless otherwise expressly defined, the terms such as "dispose", "mount", and "connect" should be understood in a broad sense. For those of ordinary skill in the art, specific meanings of the terms in the present invention may be appropriately determined with reference to the specific content in the technical solution.

The above implementations are only preferred implementations of the present invention and cannot be used to limit the protection scope of the present invention, and any non-substantive changes and substitutions made by a person skilled in the art on the basis of the present invention shall fall within the protection scope of the present invention.

## Claims

1. A power supply for dimming and color temperature adjustment, **characterized by** comprising:
a control panel (100), provided with a pressing switch knob encoder (110);
a rear housing (200), disposed on a back side of the control panel (100), wherein a wiring terminal (2112) is disposed on a surface of the rear housing; and
a control circuit board (300), disposed in the rear housing (200), wherein a control circuit is disposed on the control circuit board (300), the control circuit board (300) is electrically connected to the pressing switch knob encoder (110) and the wiring terminal (2112), the control circuit board (300) comprises a main board (310) and a plurality of sub-boards (320) vertically disposed on the main board (310), and an electrical element of the control circuit is distributed on the main board (310) and the sub-boards (320).

2. The power supply for dimming and color temperature adjustment according to claim 1, **characterized in that** the control circuit comprises a switch power supply circuit, an adjusting circuit, and a main control circuit, an input end of the switch power supply circuit is electrically connected to an input terminal in the wiring terminal (2112), an output end of the switch power supply circuit is electrically connected to an input end of the adjusting circuit and the main control circuit, an output end of the adjusting circuit is electrically connected to an output terminal in the wiring terminal (2112), the adjusting circuit is controlled by the main control circuit, and the main control circuit is electrically connected to the pressing switch knob encoder (110).

3. The power supply for dimming and color temperature adjustment according to claim 2, **characterized in that** the adjusting circuit comprises at least two output adjusting circuits, and output ends of the two output adjusting circuits are electrically connected to two different output terminals in the wiring terminal (2112) respectively.

4. The power supply for dimming and color temperature adjustment according to claim 2, **characterized in that** the control circuit further comprises a wireless control module, and the wireless control module is electrically connected to the main control circuit.

5. The power supply for dimming and color temperature adjustment according to claim 1, **characterized in that** a first electrical connector (102) is disposed on the back side of the control panel (100), a second electrical connector (2111) matched with the first electrical connector (102) is disposed on a front surface of the rear housing (200), the first electrical connector (102) is electrically connected to the pressing switch knob encoder (110), the second electrical connector (2111) is electrically connected to the control circuit board (300), and the pressing switch knob encoder (110) can be in electrical insertion connection with the second electrical connector (2111) through the first electrical connector (102) to be electrically connected to the control circuit board (300).

6. The power supply for dimming and color temperature adjustment according to claim 1, **characterized in that** the rear housing (200) comprises an inner housing (210) and an outer housing (220), the control circuit board (300) is disposed in the inner housing (210), the inner housing (210) is detachably connected to the outer housing (220), the outer housing (220) is detachably connected to the control panel (100), and the wiring terminal (2112) is disposed on a surface of the inner housing (210).

7. The power supply for dimming and color temperature adjustment according to claim 1, **characterized in that** a trim plate (101) is detachably disposed on a front surface of the control panel (100), and the trim plate (101) is provided with a through hole allowing a knob of the pressing switch knob encoder (110) to extend out.

8. The power supply for dimming and color temperature adjustment according to claim 1, **characterized in that** a rotating handle (111) is disposed on a knob of the pressing switch knob encoder (110).
